(19) Europäisches Patentamt
European Patent Office
Office européen des brevets

(11) **EP 2 240 788 B1**

(12) **FASCICULE DE BREVET EUROPEEN**

(45) Date de publication et mention
de la délivrance du brevet:
**27.06.2018 Bulletin 2018/26**

(21) Numéro de dépôt: **09707598.0**

(22) Date de dépôt: **05.02.2009**

(51) Int Cl.:
*G01R 31/00* (2006.01)  *C07C 317/26* (2006.01)
*C07C 245/12* (2006.01)  *C07K 14/76* (2006.01)
*G01K 7/42* (2006.01)

(86) Numéro de dépôt international:
**PCT/CA2009/000137**

(87) Numéro de publication internationale:
**WO 2009/097684 (13.08.2009 Gazette 2009/33)**

(54) **MÉTHODE ET DISPOSITIF POUR MESURER LA TEMPÉRATURE DU POINT CHAUD DANS UN APPAREIL ÉLECTRIQUE CONTENANT DE L'HUILE**

VERFAHREN UND VORRICHTUNG ZUR MESSUNG DER TEMPERATUR EINES HOTSPOTS IN EINER ÖLHALTIGEN ELEKTRISCHEN VORRICHTUNG

METHOD AND DEVICE FOR MEASURING THE TEMPERATURE OF A HOT SPOT IN AN OIL-CONTAINING ELECTRIC APPARATUS

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **06.02.2008 CA 2619920**

(43) Date de publication de la demande:
**20.10.2010 Bulletin 2010/42**

(73) Titulaire: **Hydro-Québec**
**Montréal, QC H3A 3G4 (CA)**

(72) Inventeurs:
• **COUTURE, Pierre**
**Boucherville, Québec J4B 4A4 (CA)**
• **DUVAL, Michel**
**Montréal (Québec) H3W 1 T8 (CA)**

(74) Mandataire: **Lavoix**
**Bayerstrasse 83**
**80335 München (DE)**

(56) Documents cités:
**JP-A- 2007 298 531    JP-A- 2008 032 735**
**US-A- 4 623 265**

• **DUVAL M ET AL: "Oil Additives for the Evaluation of Hot Spot Temperature in Power Transformers During Overload Tests", IEEE TRANSACTIONS ON ELECTRICAL INSULATION, IEEE, US, vol. EI-1, no. 5, 1 octobre 1982 (1982-10-01), pages 414-422, XP011162619, ISSN: 0018-9367**
• **DUVAL ET AL.: 'Oil Additives for the Evaluation of Hot Spot Temperature in Power Transformers During Overload Tests' IEEE TRANSCATIONS ON ELECTRICAL INSULATION vol. EI-17, no. 5, Octobre 1982, XP011162619**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

La présente invention appartient au domaine des appareils électriques et plus particulièrement, mais non exclusivement, au domaine des appareils électriques contenant une huile, tel qu'un transformateur de puissance.

L'invention concerne une méthode et un dispositif pour mesurer la température du point chaud dans un appareil électrique opéré dans des conditions opératoires prédéterminées et modifiables. Cette méthode permet également de vérifier la qualité de l'appareil en question mis sur le marché et d'estimer sa durée de vie.

### Description de l'art antérieur

La variation de la température dans un appareil électrique comprenant un ensemble électromagnétique dans une enceinte comprenant une huile dépend de plusieurs facteurs. En premier lieu, cette variation est due à la perte de chaleur $I^2R$ à l'intérieur des bobines de cuivre de l'ensemble électromagnétique (I étant la charge de courant envoyé dans les bobines, ou l'intensité, et R la résistance des bobines), ainsi qu'aux pertes dans les pièces métalliques en fer. La température varie donc en fonction de la charge ou de l'intensité du courant demandé par l'appareil. En second lieu, la variation peut être due à la fermeture des entrées d'air et des ventilateurs de l'enceinte. Finalement, la température à l'intérieur de l'enceinte pour varier en fonction des conditions extérieures telles que la situation géographique de l'appareil (à l'intérieur d'un bâtiment chauffé ou à l'extérieur), et les conditions météorologiques (température extérieure, vent, jour / nuit).

La température cependant n'est pas uniforme dans l'ensemble de l'enceinte. L'huile présente dans le haut de l'enceinte de l'appareil est généralement plus chaude que dans le bas. Cela est dû au fait que l'huile s'échauffe en passant à travers les bobines puis monte vers le haut de l'enceinte sous l'effet des forces naturelles de convection.

Le point chaud (« hot-spot » en anglais) est l'endroit dans l'enceinte qui atteint la température la plus chaude lors de l'exploitation du transformateur. Cette température ne doit pas dépasser une valeur maximum comprise entre environ 130 $\underline{o}$C et 160 $\underline{o}$C, et cela pour éviter la formation de bulles de gaz dans l'huile et/ou le vieillissement prématuré du papier utilisé comme isolant. Cette valeur maximale dépend du type de papier utilisé et de son taux d'humidité.

Le point chaud à l'intérieur de l'enceinte se trouve généralement et de façon approximative aux deux tiers supérieurs de l'ensemble électromagnétique et à un tiers à l'intérieur des bobines, mais son emplacement exact et sa magnitude peuvent changer considérablement d'un appareil à un autre dépendamment du *design* adopté par le fabricant, surtout sous des conditions de surcharge (i.e. au dessus de la charge nominale).

On peut à l'aide de logiciels et d'une connaissance de certains paramètres d'exploitation tels que le courant, la température de l'huile dans le haut et le bas de l'enceinte, la température moyenne du cuivre utilisé pour les bobines, la température externe et autres, calculer la température approximative du point chaud. Mais ce calcul est souvent peu précis et peu fiable, particulièrement pour les transformateurs dont la conception détaillée est mal connue. La « température calculée » du point chaud peut donc être significativement différente de la « température réelle » du point chaud pour certains types d'appareils ou conditions d'exploitation.

A ce jour, les autres techniques suivantes sont utilisées pour déterminer la température réelle du point chaud :

1) l'utilisation d'un thermocouple qui entraîne des problèmes de lien galvanique;

2) l'utilisation de fibres optiques qui entraîne des problèmes de localisation du point chaud et de tenue diélectrique; et

3) l'utilisation d'un traceur chimique dispersé dans l'huile qui forme des bulles de gaz à partir d'une température donnée.

L'une des limitations principales de l'utilisation des techniques 1) et 2) mentionnées ci-dessus réside en ce que la localisation du point chaud doit être connue à l'avance et en la possibilité qu'un point chaud ne soit pas détecté s'il se trouve à une position inattendue. Un autre désavantage réside en ce que ces techniques impliquent l'utilisation de sondes de mesure et que l'installation des sondes en question doit être faite pendant la fabrication du transformateur ou lors d'une rénovation majeure de celui-ci. Les sondes en question peuvent également affecter les propriétés de tenue diélectrique du transformateur. Un exemple de sonde de mesure est décrit dans le brevet américain n° US 4,140,999.

L'utilisation d'un traceur chimique mentionné ci-dessus au point 3) est décrite dans la publication scientifique par M. DUVAL et al., dans IEEE Transactions on Electrical Insulation, Vol. EI-17, N° 5, octobre 1982.

M. DUVAL et al. décrivent l'utilisation dans un transformateur de puissance de traceurs chimiques comprenant des agents de gonflement organiques tels que le 2,2'-azobis (iso-butyronitrile), l'azobiscyclohexane, le p-toluène sulfonyl hydrazide, le 4,4'-oxybis (benzène) sulfonyl hydrazide ou le diphényl sulfone-3,3'-disulfohydrazide.

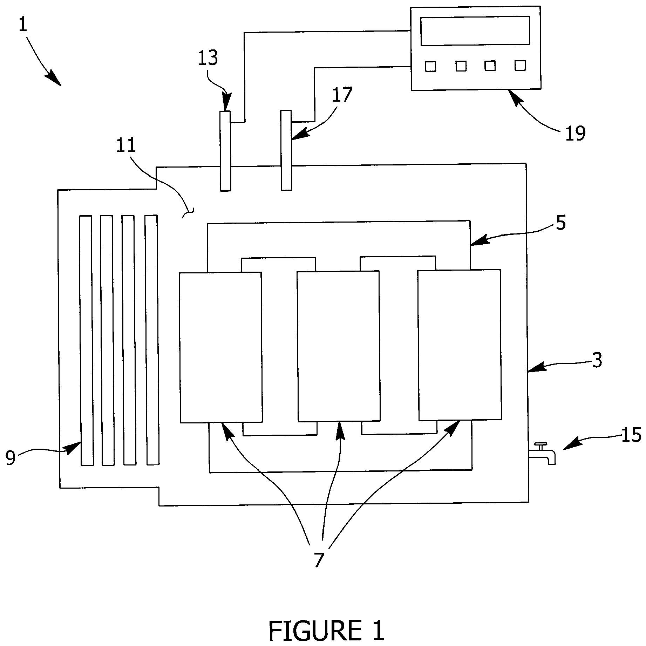

Cette technique a été développée principalement comme outil de recherche pour évaluer la température réelle des points chauds comparativement à celle fournie par les logiciels de calcul. Mais elle est peu pratique à mettre en oeuvre sur des transformateurs en service. En effet, tel que cela est représenté sur la Figure 1 issue de l'art antérieur (voir Figure 4 du document par M. Duval et al. précité), le transformateur (1) doit être muni d'une colonne de mesure (3) installée entre le réservoir de sécurité (5) et le coeur du transformateur (7), et ce afin de pouvoir prélever le gaz formé dans l'huile par les traceurs chimiques et mesurer la quantité produite afin d'évaluer le point chaud. De plus, et c'est cela sans doute son principal défaut, les traceurs chimiques utilisés sont dispersés sous forme de fine poudre dans l'huile. S'ils ne sont pas retirés rapidement par filtration après les essais d'échauffement, ils peuvent avec le temps se déposer sur les parties isolantes du transformateur et affecter ses propriétés de tenue diélectrique.

Indépendamment des défauts anormaux de service, tels que la formation d'arcs et de décharges couronnes électriques, l'augmentation de température est l'un des facteurs contribuant à la diminution de la durée de vie d'un transformateur puisque cette augmentation accélère le vieillissement du papier isolant.

Une connaissance de la température réelle du point chaud est nécessaire pour exploiter le transformateur au plus près de ses limites tout en demeurant sécuritaire. De plus, elle permet d'identifier des transformateurs non conformes, et d'estimer approximativement leur durée de vie.

**Sommaire de l'invention**

La présente invention concerne une méthode pour établir la température $T_{PC}^*$ du point chaud d'une huile contenue dans un appareil électrique, selon différentes conditions opératoires de l'appareil. La méthode comprend :

a) opérer l'appareil électrique selon au moins une condition opératoire prédéterminée de façon à augmenter la température de l'huile $T_H$, la méthode étant caractérisée en ce qu'à l'étape a) on augmente la température de l'huile $T_H$ jusqu'à ce qu'elle atteigne un équilibre, l'huile comprenant au moins un composé chimique soluble dans l'huile, chaque composé formant un résidu soluble dans l'huile à une température de formation du résidu $T_R$; et en ce qu'elle comprend en outre les étapes suivantes :

b) effectuer au moins un prélèvement d'un échantillon d'huile après l'étape a) tout en mesurant la température de l'huile $T_H$;

c) effectuer une analyse de l'échantillon prélevé à l'étape b) pour déterminer si le résidu est présent ou non;

d) à partir de l'analyse de l'étape c), estimer la température du point chaud sous la condition opératoire prédéterminée $T_{PC}$ ayant permis une apparition dans l'échantillon dudit au moins résidu, comme étant égale à la température de formation dudit au moins résidu $T_R$;

e) calculer la différence $\Delta T$ entre la température du point chaud $T_{PC}$ et la température de l'huile $T_H$ sous la condition opératoire prédéterminée;

f) établir que la température $T_{PC}^*$ selon toute autre condition d'opération de l'appareil est obtenue selon l'équation suivante : $T_{PC}^* = T_H^* + \Delta T$, $T_H^*$ étant la température de l'huile sous ladite autre condition d'opération.

Selon un premier aspect préférentiel de l'invention, la méthode est effectuée en utilisant un seul composé chimique et sous des conditions d'équilibre de température. Plus particulièrement :

- l'étape a) est effectuée en utilisant un seul composé chimique soluble dans l'huile;

- l'étape b) est effectuée après l'étape a);

- suite à l'étape c), l'étape d) est effectuée de la façon suivante :

si le résidu est présent;

d1) on élimine le résidu présent dans l'huile,

d2) on opère l'appareil selon une nouvelle condition opératoire de façon à diminuer la température $T_H$ de l'huile atteinte à l'équilibre ; et

d3) on répète les étapes b), c), d1) et d2) jusqu'à ce qu'il n'y ait plus de résidus présents dans l'échantillon prélevé à l'étape c),

si le résidu est absent :
d4) on répète les étapes a), b), et c) jusqu'à ce que le résidu soit présent dans l'échantillon;

et on établit les conditions opératoires où la température du point chaud $T_{PC}$ est égale à la température de transition du résidu $T_R$.

On décrit que la méthode peut être effectuée en utilisant un seul composé chimique et en dehors de l'équilibre des températures. Plus particulièrement :

- l'étape a) est effectuée en utilisant un seul composé chimique soluble dans l'huile;

- l'étape b) est effectuée pendant l'étape a) en prélevant à des temps différents au moins deux échantillons d'huile tout en mesurant la température de l'huile $T_H$;

- l'étape c) est effectuée pour chacun des échantillons prélevés à l'étape b) afin de déterminer la concentration de résidu présent dans l'huile;

- l'étape d) est effectuée en déterminant par extrapolation, en se basant sur les concentrations déterminées à l'étape c), un temps $t_0$ à partir duquel le résidu a commencé à se former, la température du point chaud $T_{PC}$ au temps $t_0$ étant égale à la température de formation du résidu $T_R$.

Selon un autre aspect préférentiel de l'invention, la méthode est effectuée en utilisant au moins deux composés chimiques sous des conditions d'équilibre de température. Plus particulièrement :

- l'étape a) est effectuée en utilisant au moins deux composés chimiques différents et solubles dans l'huile formant chacun un résidu soluble dans l'huile à une température de formation du résidu $T_R$, les températures $T_R$ pour chaque résidu étant différentes les unes des autres;

- l'étape b) est effectuée après l'étape a);

- l'étape d) est effectuée de la façon suivante :

    si aucun résidu n'est présent :

        d1) on répète les étapes a) à c) jusqu'à l'apparition d'au moins un des résidus solubles dans les échantillons prélevés;

    si tous les résidus sont présents :

        d2) on élimine les résidus présents dans l'huile; et
        d3) on répète les étapes a) à c) jusqu'à la disparition d'au moins un des résidus solubles dans les échantillons prélevés;

    on établit les conditions opératoires où la température du point chaud $T_{PCest}$ est comprise entre la température $T_{R1}$ de formation du résidu du composé chimique ayant produit le résidu et la température $T_{R2}$ de formation du résidu du composé chimique n'ayant pas produit de résidu;

- et à l'étape e), on calcule $\Delta T$ comme étant égal à $T_{PCest} - T_H$, $T_H$ étant la température de l'huile atteinte à l'équilibre mesurée lors de la dernière itération de l'étape a).

La présente invention vise aussi un dispositif pour établir la température $T_{PC}^*$ du point chaud d'une huile contenu dans un appareil électrique, selon différentes conditions opératoires de l'appareil, l'huile comprenant au moins un composé chimique soluble dans l'huile, chaque composé formant un résidu soluble dans l'huile à une température de formation du résidu $T_R$. Le dispositif comprend :

    des moyens pour effectuer une analyse d'un échantillon d'huile pour déterminer au moins si le résidu est présent;

    des moyens pour estimer la température du point chaud sous une condition opératoire prédéterminée $T_{PC}$ ayant permis une apparition dans l'échantillon dudit au moins un résidu, comme étant égale à la température de formation dudit au moins résidu $T_R$;

    des moyens pour mesurer la température de l'huile $T_H$;

    des moyens pour calculer une différence $\Delta T$ entre la température du point chaud $T_{PC}$ et la température de l'huile $T_H$ lorsqu'elle a atteint un équilibre sous la condition opératoire prédéterminée; et

    des moyens pour établir la température du point chaud de l'appareil sous tout autre condition d'opération $T_{PC}^*$, selon l'équation suivante : $T_{PC}^* = T_H^* + \Delta T$; $T_H^*$ étant la température de l'huile sous ladite autre condition d'opération.

La présente invention propose donc une nouvelle méthode différente de l'art antérieur en ce qu'elle repose, entre autres choses, sur l'utilisation de traceurs chimiques solubles dans l'huile du transformateur, ne formant pas de bulles dans l'huile et comprenant des molécules possédant au moins une propriété qui varie avec la température.

Préférentiellement, l'appareil électrique est un transformateur de puissance électrique. Il est toutefois important de mentionner que la présente invention ne s'applique pas uniquement aux transformateurs mais à tout autre appareil comprenant un ensemble électromagnétique placé au sein d'une enceinte comprenant un bain d'huile.

L'invention et ses avantages ressortiront mieux de la description qui suit, en se référant aux dessins annexés.

## Brève description des dessins

La Figure 1 est une représentation schématique d'un transformateur à huile comprenant le dispositif selon un mode préférentiel de l'invention.

La Figure 2 est un schéma représentant un exemple d'évolution de la température du point chaud en fonction du temps de fonctionnement du transformateur, ainsi que des exemples de température de transition de traceurs chimiques nommés A, B, C, D, E, F et G.

La Figure 3 est un graphe représentant les résultats obtenus pour l'exemples 3, montrant la mesure du point chaud, et l'évolution en fonction du temps des températures au sein de appareil et de la concentration de gaz dissous dans l'huile.

## Description d'éléments préférentiels de l'invention

Selon un mode préférentiel de l'invention, la présente invention a pour objet une méthode pour estimer la température réelle d'un point chaud au sein d'un appareil électrique. Cette méthode est réalisée grâce à l'introduction d'un composé chimique dans l'huile de l'appareil. Ce composé est appelé ci-après « traceur chimique » ou tout simplement « traceur ».

L'invention concerne donc également un dispositif pour établir la température $T_{PC}*$ du point chaud d'une huile contenu dans un appareil électrique, selon une condition opératoire donnée de l'appareil, l'huile comprenant au moins un composé chimique soluble dans l'huile, chaque composé formant un résidu soluble dans l'huile à une température de formation du résidu $T_R$.

Le dispositif comprend des moyens pour effectuer une analyse d'un échantillon d'huile pour déterminer au moins si le résidu est présent. Préférentiellement ces moyens utilisent la colorimétrie, l'analyse des gaz dissous, la spectrométrie de masse, la résonance magnétique nucléaire, la chromatographie en phase gazeuse ou liquide, la spectrométrie infrarouge, la spectrométrie ultraviolette ou la fluorescence X.

Le dispositif comprend aussi des moyens pour mesurer la température de l'huile $T_H$. Préférentiellement, ces moyens comprennent un thermomètre, un thermocouple, une sonde de mesure de température, ou tout autres moyens connus de l'homme de l'art pour mesurer une température.

Le dispositif comprend en outre :

des moyens pour estimer la température du point chaud sous une condition opératoire prédéterminée $T_{PC}$ ayant permis une apparition dans l'échantillon dudit au moins un résidu, comme étant égale à la température de formation dudit au moins résidu $T_R$;

des moyens pour calculer une différence $\Delta T$ entre la température du point chaud $T_{PC}$ et la température de l'huile $T_H$ sous la condition opératoire prédéterminée; et

des moyens pour établir la température du point chaud de l'appareil selon la condition d'opération donnée $T_{PC}*$, selon l'équation suivante : $T_{PC}* = T_H*+ \Delta T$; $T_H*$ étant la température de l'huile sous la condition donnée.

Préférentiellement, ces moyens pour effectuer l'analyse, pour estimer, pour calculer et pour établir la température du point chaud $T_{PC}*$ peuvent être réalisés par un ordinateur muni d'un logiciel et relié à un clavier et un écran.

La Figure 1 illustre de façon schématique un appareil électrique (1) comprenant le dispositif selon l'invention.

L'appareil (1) comprend une enceinte (3) comprenant en son sein un ensemble électromagnétique formé d'un coeur (5) et de bobines (7).

L'appareil peut également être muni d'un système de ventilation (9) permettant de réguler la température interne de l'appareil.

L'enceinte, ou cuve (3), est remplie d'une huile (11), telle une huile minérale.

L'appareil est également muni d'une sonde (13) de mesure de température permettant une lecture constante de la température de l'huile.

Le bas de la cuve (3) est également munie d'un système d'ouverture (15), permettant de recueillir un échantillon d'huile ou de purger l'appareil de son huile.

L'appareil (1) peut également comprendre une autre sonde (17) permettant de détecter en continu la présence dans l'huile de composés chimiques.

Les différentes sondes (13, 17) peuvent être reliées à un ordinateur (19) afin d'enregistrer les données mesurées et effectuer les calculs permettant la détermination du point chaud.

Selon divers modes préférentiels de l'invention, la méthode comprend une série d'étapes à effectuer pour déterminer la température du point chaud d'un transformateur sous une condition opératoire donnée. Le transformateur peut être neuf ou usagé.

## Étape a) :

L'étape a) de la méthode selon l'invention consiste à opérer l'appareil électrique selon au moins une condition opératoire prédéterminée de façon à augmenter la température de l'huile $T_H$.

L'huile comprend au moins un composé chimique soluble dans l'huile qui est choisi pour former un résidu soluble dans l'huile à une température de formation du résidu $T_R$.

Par « opérer l'appareil électrique », il faut comprendre que l'opérateur, de façon générale, appliquera une charge de courant de façon à faire augmenter ou baisser la température au sein de l'appareil. La vitesse d'augmentation de la température est généralement exprimée en ºC par minute ou par heure.

L'opérateur pourra également effectuer d'autres opérations telles qu'appliquer une circulation forcée ou non d'huile, refroidir ou non l'huile par l'utilisation de radiateurs. Ces opérations sont établies comme étant une ou des « conditions prédéterminées ».

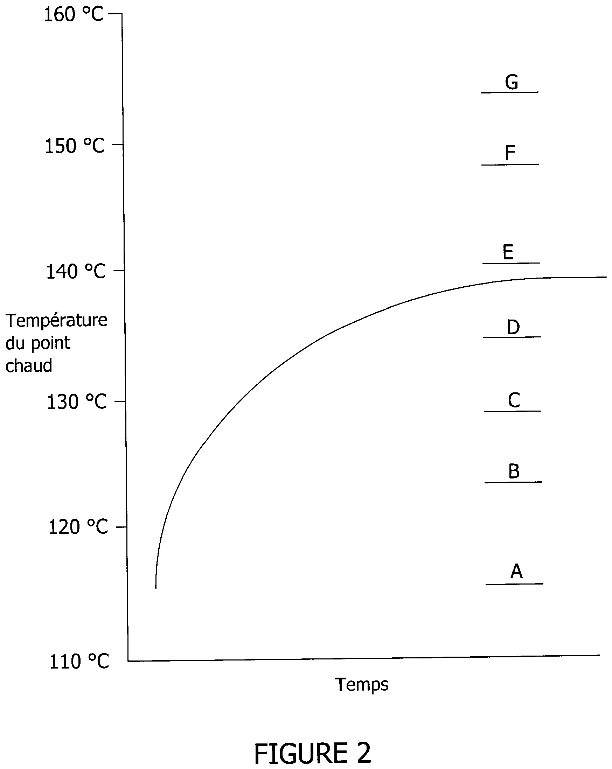

Un exemple d'augmentation de température de l'huile en fonction de temps est illustré sur la Figure 2.

La Figure 2 peut également représenter une courbe d'évolution de la température calculée du point chaud en fonction du temps d'opération, telle que obtenue grâce à des logiciels de calculs prenant en considération les paramètres intrinsèques au transformateur étudié (taille, capacité en kVA ou MVA, circulation forcée ou non d'huile, etc.) ou externes (température extérieure, vitesse du vent, etc.). La courbe d'évolution de la température réelle du point chaud peut être au-dessus ou au-dessous de celle de la température calculée.

Par « conditions opératoires » on comprend toute action ou tout élément extérieur entraînant une variation (élévation ou diminution) de la température dans l'enceinte de l'appareil.

Les conditions opératoires qui peuvent être prédéterminées et contrôlées par l'opérateur comprennent de préférence la valeur de la charge électrique ou de l'intensité du courant demandé par l'appareil. Tel que mentionné ci-dessus, la variation de température est principalement due à la perte de chaleur $IR^2$ (I = intensité de courant, R = résistance des bobines) à l'intérieur des bobines de cuivre.

Les conditions opératoires comprennent également le degré d'ouverture des entrées d'air et la vitesse des ventilateurs qui permettent l'aération de l'intérieur de l'enceinte. On comprendra que plus la vitesse des ventilateurs est lente, ou plus l'ouverture des entrées d'air, est petite et plus la température interne baissera ou augmentera plus lentement, et inversement.

Les conditions opératoires à déterminer comprennent aussi des facteurs externes qui ne sont pas forcément contrôlables par l'opérateur tels que la position géographique (extérieur ou intérieur d'un bâtiment chauffé) et les conditions météorologiques quand l'appareil est à l'extérieur (température extérieure, vitesse et direction du vent, présence de lumière (jour / nuit).

Sous l'étape a), la présente invention peut être mise en oeuvre avec un, deux ou plusieurs composés chimiques, ou traceurs, de nature différente.

Pour pouvoir être sélectionné, ce traceur doit posséder un certain nombre de propriétés physiques et/ou chimiques bien connues de l'opérateur.

Le traceur doit avoir une température de réaction ou de transition connue à laquelle il va se transformer par réaction chimique ou par un changement d'état, pour devenir ce que nous appelons ci-après, « un résidu du traceur chimique », ou simplement « un résidu ». Le résidu doit être également soluble dans l'huile.

La température de réaction ou de transition du traceur doit être inférieure à la température maximum acceptable à l'intérieur du transformateur.

Il est entendu que la « température maximum acceptable » est la température à laquelle le transformateur ne sera pas endommagé, et notamment le papier utilisé comme isolant. Cette température est généralement comprise entre 130 et 160ºC selon la nature du papier utilisé dans le transformateur et son humidité en service. Le traceur utilisé comprend des molécules solubles dans l'huile.

De façon plus préférentielle, le traceur peut être un composé qui, à une température donnée, forme un gaz soluble dans l'huile.

Un premier exemple de ces composés sont des molécules diazoïques formant par décomposition de l'azote ($N_2$) soluble dans l'huile, tels que ladiphénylsulfone-3,3'-disulfohydrazine ou la 4,4' oxybis(benzènesulfonyl)hydrazine chimiquement modifiés. La modification chimique consiste à greffer sur la molécule une autre molécule hydrophone, telle qu'une longue chaîne hydrocarbonée, préférentiellement ayant de 12 à 18 atomes de carbone. La présence de ce segment hydrophobe sur la molécule diazoïque la rend parfaitement soluble dans l'huile.

Dans ce cas, le résidu étant de l'azote soluble dans l'huile, une étape préliminaire, mais optionnelle, de la méthode selon l'invention peut être effectuée qui consiste à débarrasser l'huile d'une partie de son air, et donc de l'azote contenu dans cet air, et ce pour améliorer la dissolution du résidu gazeux dans l'huile. La présence d'azote de l'air dissous dans l'huile fausserait la détermination de la concentration d'azote issu de la transformation du traceur en résidu.

D'autres molécules solubles dans l'huile et libérant des gaz solubles dans l'huile, comme le monoxyde de carbone ou l'ammoniac, peuvent également être utilisées. Par exemple, les métaux-carbonyles, possédant au moins une chaîne latérale hydrocarbonée assez longue pour les rendre solubles dans l'huile permettent la production de monoxyde de carbone soluble dans l'huile.

Le composé ou traceur chimique peut également être une molécule changeant de couleur de façon irréversible à une température donnée, tels que des colorants ou des pigments.

Le traceur chimique peut également être un composé ou une molécule changeant de phase de façon irréversible à une température donnée, tels que des cristaux liquides.

Le traceur chimique peut également être un composé ou une molécule changeant de structure chimique de façon irréversible à une température donnée, tels que des albumines.

L'aspect inventif de l'invention décrite dans la présente demande ne se limite pas aux traceurs chimiques décrits ci-dessus.

Préférentiellement, une quantité adéquate de composé(s) chimique(s) peut être introduite dans l'huile dès la fabrication de l'appareil, ou avant l'application de la méthode selon l'invention. Il doit bien entendu être compris que cette « quantité adéquate » dépend des facteurs suivants :

- le volume d'huile présent dans l'appareil;
- la qualité de l'huile utilisée (minérale on non minérale);
- la nature du ou des traceurs utilisés;

- la quantité de résidu pouvant se former, et
- la technique d'analyse disponible et utilisée dans l'étape c) ci-après.

La quantité de chaque traceur utilisé peut s'exprimer en concentration massique ou molaire. Préférentiellement pour chaque traceur, cette concentration correspond à sa masse contenue dans une masse connue d'huile et s'exprime donc en concentration massique ou en pourcentage massique. Une concentration finale d'environ 0,01 % à 0,1 % en poids de composés chimiques dans l'huile, selon le type de traceur utilisé, est typique pour l'application de la méthode selon l'invention.

**Étape b)** :

L'étape b) de la méthode consiste à effectuer au moins un prélèvement d'un échantillon d'huile pendant ou après l'étape a) tout en mesurant la température de l'huile $T_H$.

Les méthodes habituelles d'échantillonnage d'huile sur les transformateurs peuvent être utilisées (seringues, bouteilles ou tubes). Des appareils permettant de mesurer en continu le résidu de chaque traceur chimique sans avoir à prélever d'échantillons d'huile, tels que par exemple des sondes pour les gaz dissous ou des colorimètres, peuvent également être utilisés.

Tel que déjà indiqué, la température de l'huile dans la cuve de l'appareil électrique n'est pas uniforme pour des raisons de flux de convection. Lors de l'application de la méthode, la mesure de la température de l'huile $T_H$ doit donc se faire préférablement au même endroit de la cuve. La mesure de $T_H$ peut cependant être effectuée n'importe où dans la cuve, mais pour des raisons pratiques, elle le sera préférentiellement en haut de la cuve. Un thermomètre, une sonde ou tout autre moyen pour mesurer une température connue, peuvent être utilisés pour mensurer $T_H$.

**Étape c)** :

L'étape c) de la méthode consiste à effectuer une analyse de l'échantillon prélevé à l'étape b) pour déterminer si le résidu est présent.

Selon l'un des modes préférentiels de l'invention, l'analyse consiste à mesurer la concentration du ou des résidus. Il va de soi qu'une concentration non détectable d'un résidu équivaut à l'absence du résidu dans l'échantillon.

Toutes les techniques d'analyse connues de l'homme de l'art et qui permettent de déterminer la présence d'un composé chimique ainsi que sa concentration peuvent être utilisées dans l'application de la méthode selon la présente invention.

La technique utilisée est fonction du composé chimique choisi à l'étape a) de la méthode.

Certaines techniques peuvent être directement employées sur le terrain lors du prélèvement, telles que la colorimétrie ou l'analyse des gaz dissous (AGD) sur site. L'AGD est une technique bien connue de l'homme de l'art.

D'autres techniques, qui nécessitent un équipement plus complexe, peuvent être utilisées en laboratoire, telles que par exemple la spectrométrie de masse (MS), la résonance magnétique nucléaire (RMN), la chromatographie en phase gazeuse ou liquide (GC, LC ou HPLC), la spectrométrie infrarouge (IR) ou ultraviolette (UV), ou la fluorescence X.

Les techniques utilisables ne se limitent pas aux exemples mentionnés ci-dessus.

**Étape d)** :

A partir de l'analyse de l'étape c), l'étape d) consiste à estimer si la température du point chaud est égale, supérieure ou inférieure à la température de formation du ou des résidus $T_R$.

Dans le cas où le ou les résidus attendus sont absents de l'huile, l'opérateur en déduit que la température réelle du point chaud est inférieure à la température de transition du ou des traceurs utilisés. En conséquence, l'opérateur peut recommencer la méthode depuis l'étape a).

Dans le cas où un résidu est présent, l'opérateur en déduit que la température du point chaud est au moins égale à la température de transition du traceur chimique, et cela en suivant les différents modes préférentiels détaillés ci-dessous.

Cas où un seul traceur est utilisé à l'équilibre:

Dans ce mode d'opération, un seul traceur est utilisé, on attend qu'un équilibre-de la température $T_H$ de l'huile à l'issue de l'étape a) soit atteint (voir Figure 2), et on effectue l'analyse décrite à l'étape c) pour déterminer si le résidu est présent ou absent.

Si le résidu est présent, l'étape d) peut être alors effectuée de la façon suivante :

　d1) on élimine le résidu présent dans l'huile,
　d2) on opère l'appareil selon une nouvelle condition opératoire de façon à diminuer la température $T_H$ de l'huile atteinte à l'équilibre (voir Figure 2); et
　d3) on répète les étapes b), c), d1) et d2) définies ci-dessus, jusqu'à ce qu'il n'y ait plus de résidus présent dans l'échantillon prélevé à l'étape c).

Dans le cas où le ou les résidus sont sous forme de gaz dissous dans l'huile, l'étape d1) consistera à dégazer l'huile.

Si le résidu est absent :

　d4) on opère l'appareil selon une nouvelle condition opératoire de façon à augmenter la température $T_H$ de l'huile atteinte à l'équilibre; et

d5) on répète les étapes a), b) et c) jusqu'à ce que du résidu soit présent dans l'échantillon prélevé à l'étape c).

Dans les deux cas, on établit les conditions d'opération où la température du point chaud $T_{PC}$ est égale à la température de transition du résidu $T_R$.

Cas où un seul traceur est utilisé hors équilibre :

Dans ce mode d'opération, un seul traceur est utilisé, mais on mesure les concentrations en résidu pendant la montée en température de la Figure 2, et non quand l'équilibre de température est atteint. Puis on détermine par extrapolation un temps $t_0$ à partir duquel le résidu a commencé à se former, la température du point chaud $T_{PC}$ au temps $t_0$ étant alors égale à la température de formation du résidu $T_R$.

Cas où au moins deux traceurs sont utilisés à l'équilibre :

En présence d'au moins deux traceurs dans l'huile, l'étape d) est effectuée de la façon suivante selon les deux cas suivants.
Si aucun résidu n'est présent on répète les étapes a) à c) jusqu'à l'apparition d'au moins un des résidus solubles dans les échantillons prélevés;
Si tous les résidus sont présents, on élimine les résidus présents dans l'huile; et on effectue au moins une itération des étapes a) à c) jusqu'à la disparition d'au moins un des résidus solubles dans les échantillons prélevés.
On établit les conditions opératoires où la température du point chaud $T_{PCest}$ est comprise entre la température $T_{R1}$ de formation du résidu du composé chimique ayant produit le résidu et la température $T_{R2}$ de formation du résidu du composé chimique n'ayant pas produit de résidu.

**Étape e)** :

L'étape e) consiste à calculer la différence $\Delta T$ entre :

- la température du point chaud $T_R$ obtenue à l'étape d), quel que soit le mode de réalisation préféré choisi, et
- la température de l'huile $T_H$ sous la condition opératoire prédéterminée.

**Étape f)** :

Finalement, l'étape f) consiste à établir que la température du point chaud $T_{PC}^*$ selon tout autre condition d'opération donnée de l'appareil est obtenue selon l'équation suivante :

$$T_{PC}^* = T_H^* + \Delta T$$

$T_H^*$ étant la température de l'huile sous la condition donnée.
Une fois la différence $\Delta T$ mesurée en suivant les étapes a) à e) de la méthode, l'opérateur pourra en déduire la température du point chaud $T_{PC}$ pour tout autre condition opératoire en mesurant la température de l'huile $T_H$ correspondant à cette condition. La connaissance de la valeur de $T_{PC}$ permettra à l'opérateur de varier la température de l'huile sans crainte de dépasser la température limite permise dans l'huile de l'appareil, et ainsi sans crainte d'endommager l'appareil, dans la mesure où le point chaud sous ces conditions sera inférieur à cette température limite.

**EXEMPLES**

Exemple 1 théorique d'utilisation d'un seul traceur

La méthode selon cet autre mode préféré de l'invention, soit l'utilisation dans l'huile du transformateur d'un seul traceur chimique, peut être également envisagée de la façon suivante :

  a) on sélectionne le traceur;

  b) on introduit la quantité adéquate du traceur dans l'huile du transformateur;

  c) on opère le transformateur de façon à atteindre une température calculée du point chaud à l'équilibre légèrement inférieure à la température de transition du traceur;

  d) on extrait un échantillon d'huile du transformateur;

  e) on analyse pour démontrer l'absence du résidu;

  f) on opère à nouveau le transformateur de façon à atteindre une température calculée du point chaud à l'équilibre légèrement supérieure à la température de transition du traceur;

  g) on extrait un second échantillon d'huile du transformateur que l'on analyse pour déterminer la présence ou non du résidu; et

  h1) si le résidu est présent, on en déduit qu'on a atteint la température réelle du point chaud;

  h2) si le résidu n'est pas présent, on en déduit qu'on n'a pas encore atteint la température réelle du point chaud à l'équilibre, et on opère le transformateur de façon à augmenter davantage la température du point chaud, ou

h3) si le résidu n'est pas formé en quantité suffisante pour être détectable à la température de transition, et nécessite de dépasser cette température de transition pour être détectable, ou si l'on préfère utiliser le traceur en mode dynamique, alors :

i) on opère le transformateur de façon à amener la température calculée du point chaud de 15 à 30°C au-dessus de la température de transition;

ii) on prélève régulièrement des échantillons d'huile pour mesurer l'augmentation du contenu en résidu;

iii) on détermine par extrapolation à quel moment la réaction de transition a débuté, et donc la température réelle du point chaud à ce moment; et

iv) de façon optionnelle, on peut recommencer la méthode en opérant le transformateur de façon optimale afin d'obtenir une meilleure précision sur la mesure du point chaud.

Exemple 2 théorique d'utilisation de plusieurs traceurs :

La méthode comprend l'addition à une huile du transformateur d'au moins deux traceurs chimiques ayant chacun une température de transformation différente de la température de transformation de l'autre traceur chimique choisi et comprise entre la température ambiante et la température maximum acceptable à l'intérieur du transformateur.

La méthode comprend alors les étapes suivantes :

a) on sélectionne plusieurs traceurs chimiques différents;

b) on introduit les traceurs chimiques dans l'huile;

c) on opère le transformateur durant une période de temps déterminée pour obtenir la température calculée du point chaud souhaitée (au-dessus ou au-dessous de la température de transition des traceurs);

d) on extrait du transformateur durant la période de temps déterminée, un échantillon d'huile; et

e) on analyse l'échantillon pour déterminer la présence ou non d'un ou plusieurs résidus.

On déduit de l'analyse effectuée à l'étape e) que la température réelle du point chaud est comprise entre la température de transition à seuil de l'un des traceurs ayant produit un résidu et la température de transition à seuil de l'un des traceurs n'ayant pas produit un résidu. Optionnellement, on recommence les étapes c) à e) à des températures différentes de manière à réduire l'incertitude de la mesure.

Cet aspect de l'invention peut être également illustré par la Figure 2 qui représente un exemple d'évolution de la température réelle ou calculée du point chaud en fonction du temps d'opération du transformateur, ainsi que des exemples de températures de réaction de transition de plusieurs traceurs chimiques, appelés A, B, C, D, E, F et G.

Selon l'exemple illustré sur la Figure 2, où la courbe représente la température réelle du point chaud, l'analyse de l'huile du transformateur doit montrer la présence de résidus des traceurs A, B, C, D, mais l'absence de résidus pour les traceurs E, F et G.

Cette méthode permet d'effectuer la mesure directement dans un poste sans interrompre l'exploitation du transformateur.

La méthode selon l'invention peut comprendre une étape préalable et optionnelle de dégazage de l'huile afin de permettre une meilleure et/ou complète dissolution des résidus issus des traceurs, quand lesdits résidus sont des gaz. Par exemple, lorsque le résidu est le gaz $N_2$, il faut retirer l'air dissous dans l'huile, car l'air contient une quantité bien connue de gaz $N_2$ la présence d'azote de l'air dissous dans l'huile fausserait la détermination de la concentration d'azote issu de la transformation du traceur en résidu.

Exemples 3 à 5 :

Les trois exemples suivants ont été réalisés dans un même transformateur Federal Pioneer® de 100 kilovolt-ampères (KVA) et de 14,4 kV à 120 V, contenant 35 gallons d'huile minérale isolante Voltesso 35. Une charge de courant nominale a été appliquée pendant 6 h pour les exemples 1 et 3, et pendant 8h pour l'exemple 2.

La température de l'huile dans le haut de la cuve du transformateur à la fin des essais était de 120 °C et 135°C, respectivement.

Exemple 3 :

Le traceur choisi est une molécule de diphénylsulfone-3,3'-disulfohydrazine chimiquement modifiée pour la rendre soluble dans l'huile minérale (molécule D). On greffe pour cela sur la molécule une chaîne latérale d'hydrocarbures saturés, contenant 18 atomes de carbones. Une telle molécule modifiée est disponible commercialement sur commande spéciale auprès de la compagnie Uniroyal. Sa température de réaction ou de transition est de 130°C à laquelle la molécule forme de l'azote $N_2$ gazeux.

Au préalable, l'huile du transformateur est partiellement dégazée pour éliminer la plus grande partie de l'air qui y est normalement dissout, jusqu'à une teneur d'environ 2% d'air dans l'huile, de façon à ce que l'azote formé par décomposition de la molécule D se dissolve dans l'huile plutôt que de former des bulles de gaz.

La quantité de molécule D introduite dans l'huile du transformateur est calculée de façon à ce que sa concentration finale soit d'environ 0.1 % en poids du traceur dans l'huile.

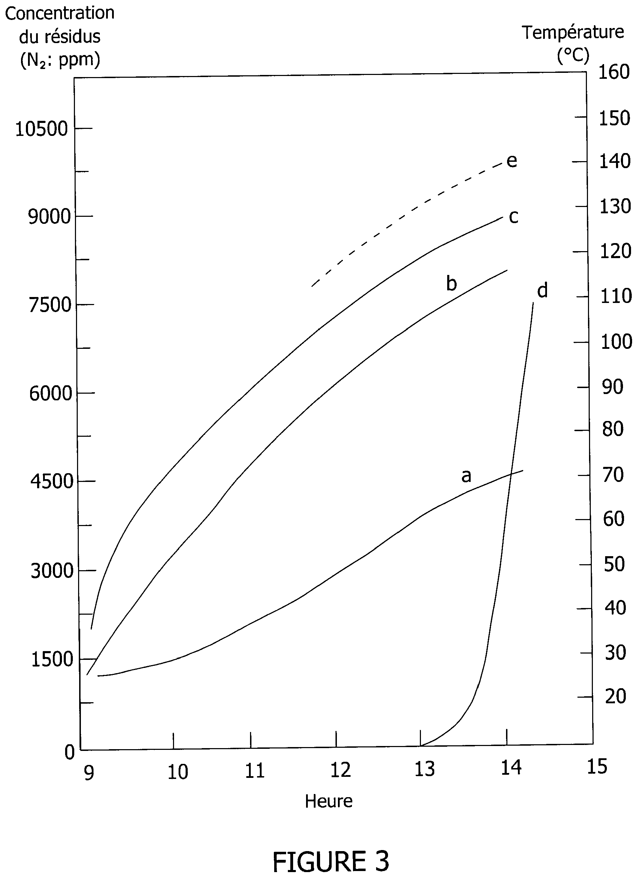

Les résultats sont indiqués sur la Figure 3, les courbes illustrées représentent :

     a) température de l'huile dans le bas de la cuve;

     b) température de l'huile dans le haut de la cuve;

     c) thermocouple dans le canal d'huile sortant des enroulements;

     d) concentration d'azote $N_2$ dissous dans l'huile (en ppm);

     e) température réelle du point chaud

On fournit une charge de courant au transformateur, de façon à élever la température de l'huile (courbes a et b de la Figure 3).

On prélève des échantillons d'huile pendant l'opération et on détecte le pic de formation d'azote dû à la décomposition de la molécule D le long de la courbe expérimentale de la Figure 3 (courbe d). La technique utilisée est l'analyse des gaz dissous au laboratoire (AGD).

On en déduit qu'au moment de l'apparition du résidu (courbe d), la température du point le plus chaud dans l'huile de la cuve est égale à la température de transformation du résidu, soit 130°C. La courbe (e) de la figure 3 montre l'évolution de la température réelle du point chaud en fonction du temps.

Exemple 4 :

Le traceur choisi est une molécule de 4,4' oxy-bis(benzènesulfonyl)hydrazine chimiquement modifiée pour la rendre soluble dans l'huile minérale (molécule F). On greffe pour cela sur la molécule une chaîne latérale d'hydrocarbures saturés, contenant typiquement 18 atomes de carbone. Une telle molécule modifiée est disponible commercialement sur commande spéciale auprès de la compagnie Uniroyal. Sa température de réaction ou de transition est de 150°C à laquelle la molécule forme de l'azote $N_2$ gazeux.

Au préalable, l'huile du transformateur est partiellement dégazée pour éliminer la plus grande partie de l'air qui y est normalement dissout, jusqu'à une teneur d'environ 2% d'air dans l'huile, de façon à ce que l'azote formé par décomposition de la molécule F se dissolve dans l'huile plutôt que de former des bulles de gaz. La quantité de molécule F introduite dans l'huile du transformateur est calculée de façon à ce que sa concentration finale soit d'environ 0.1% en poids de traceur dans l'huile.

Des formations de gaz similaires à celles présentées sur la Figure 3 ont été obtenues, mais à des températures plus élevées.

Exemple 5 :

Le traceur choisi est une molécule de métal carbonyle possédant une chaîne latérale hydrocarbonée (molécule G).

Sa température de réaction ou de transition est de 100 °C, à laquelle la molécule forme du monoxyde de carbone (CO) entièrement soluble dans l'huile.

La quantité de molécules G introduite dans l'huile du transformateur est calculée de façon à ce que sa concentration finale soit d'environ 0.01% en poids de traceur dans l'huile.

Des résultats de formation de gaz similaires à ceux indiqués sur la Figure 3 sont obtenus, mais à des températures plus basses.

**Revendications**

1. Méthode pour établir la température $T_{PC}^*$ du point chaud d'une huile contenue dans un appareil électrique, selon différentes conditions opératoires de l'appareil, la méthode comprenant :

     a) opérer l'appareil électrique selon au moins une condition opératoire prédéterminée de façon à augmenter la température de l'huile $T_H$; la méthode étant **caractérisée en ce qu'**à l'étape a) on augmente la température de l'huile $T_H$ jusqu'à ce qu'elle atteigne un équilibre, l'huile comprenant au moins un composé chimique soluble dans l'huile, chaque composé formant un résidu soluble dans l'huile à une température de formation du résidu $T_R$;
     et **en ce qu'**elle comprend en outre les étapes suivantes :
     b) effectuer au moins un prélèvement d'un échantillon d'huile après l'étape a) tout en mesurant la température de l'huile $T_H$;
     c) effectuer une analyse de l'échantillon prélevé à l'étape b) pour déterminer si le résidu est présent ou non;
     d) à partir de l'analyse de l'étape c), estimer la température du point chaud sous la condition opératoire prédéterminée $T_{PC}$ ayant permis une apparition dans l'échantillon dudit au moins résidu, comme étant égale à la température de formation dudit au moins résidu $T_R$;
     e) calculer la différence $\Delta T$ entre la température du point chaud $T_{PC}$ et la température de l'huile $T_H$ sous la condition opératoire prédéterminée;
     f) établir que la température $T_{PC}^*$ selon toute autre condition d'opération de l'appareil est obtenue selon l'équation suivante : $T_{PC}^* = T_H^* +$

ΔT, $T_H$* étant la température de l'huile sous ladite autre condition d'opération.

2. La méthode selon la revendication 1, dans laquelle :

- l'étape a) est effectuée en utilisant un seul composé chimique soluble dans l'huile;
- l'étape b) est effectuée après l'étape a);
- suite à l'étape c), l'étape d) est effectuée de la façon suivante :

si le résidu est présent;

d1) on élimine le résidu présent dans l'huile,
d2) on opère l'appareil selon une nouvelle condition opératoire de façon à diminuer la température $T_H$ de l'huile atteinte à l'équilibre; et
d3) on répète les étapes b), c), d1) et d2) jusqu'à ce qu'il n'y ait plus de résidus présents dans l'échantillon prélevé à l'étape c),

si le résidu est absent :
d4) on répète les étapes a), b), et c) jusqu'à ce que le résidu soit présent dans l'échantillon;
et on établit les conditions opératoires où la température du point chaud $T_{PC}$ est égale à la température de transition du résidu $T_R$.

3. La méthode selon la revendication 1, dans laquelle :

- l'étape a) est effectuée en utilisant au moins deux composés chimiques différents et solubles dans l'huile formant chacun un résidu soluble dans l'huile à une température de formation du résidu $T_R$, les températures $T_R$ pour chaque résidu étant différentes les unes des autres;
- l'étape b) est effectuée après l'étape a);
- l'étape d) est effectuée de la façon suivante :

si aucun résidu n'est présent :
d1) on répète les étapes a) à c) jusqu'à l'apparition d'au moins un des résidus solubles dans les échantillons prélevés;
si tous les résidus sont présents :

d2) on élimine les résidus présents dans l'huile; et
d3) on répète les étapes a) à c) jusqu'à la disparition d'au moins un des résidus solubles dans les échantillons prélevés;

on établit les conditions opératoires où la température du point chaud $T_{PCest}$ est comprise entre la température $T_{R1}$ de formation du résidu du composé chimique ayant produit le résidu et la température $T_{R2}$ de formation du résidu du composé chimique n'ayant pas produit de résidu;

- et à l'étape e), on calcule ΔT comme étant égal à $T_{PCest}$ - $T_H$, $T_H$ étant la température de l'huile atteinte à l'équilibre mesurée lors de la dernière itération de l'étape a).

4. La méthode selon l'une quelconque des revendications 1 à 3, dans laquelle l'appareil électrique est un transformateur de puissance électrique.

5. La méthode selon la revendication 1, dans laquelle le ou les composés chimiques, à une température donnée, sont :

- un composé qui forme un gaz soluble dans l'huile;
- un composé changeant de couleur de façon irréversible;
- un composé qui change de phase de façon irréversible; ou
- un composé changeant de structure chimique de façon irréversible.

6. La méthode selon la revendication 1, dans laquelle le ou les composés chimiques sont des composés diazoïques, des métaux-carbonyles; des colorants, des pigments, des cristaux liquides ou des albumines.

7. La méthode selon la revendication 6, dans laquelle le ou les composés chimiques sont des composés diazoïques, le résidu alors formé étant de l'azote soluble dans l'huile, la méthode comprenant alors une étape préliminaire à l'étape a) consistant à effectuer un dégazage de l'huile pour éliminer de celle-ci l'air dissous.

8. La méthode selon la revendication 7, dans laquelle le ou les composés chimiques sont choisis parmi le groupe constitué de la diphénylsulfone-3,3'-disulfohydrazine et la 4,4'- oxybis-(benzènesulfonyl)hydrazine, modifiés chimiquement pour être solubles dans l'huile.

9. Un dispositif pour établir la température $T_{PC}$* du point chaud d'une huile contenu dans un appareil électrique (1), selon différentes conditions opératoires de l'appareil, l'huile comprenant au moins un composé chimique soluble dans l'huile, chaque composé formant un résidu soluble dans l'huile à une température de formation du résidu $T_R$; le dispositif étant **caractérisé en ce qu'**il comprend :

des moyens (17) pour effectuer une analyse d'un échantillon d'huile pour déterminer si le résidu est présent;

des moyens (19) pour estimer la température du point chaud sous une condition opératoire prédéterminée $T_{PC}$ ayant permis une apparition dans l'échantillon dudit au moins un résidu, comme étant égale à la température de formation dudit au moins résidu $T_R$;

des moyens (13) pour mesurer la température de l'huile $T_H$;

des moyens (19) pour calculer une différence $\Delta T$ entre la température du point chaud $T_{PC}$ et la température de l'huile $T_H$ lorsqu'elle a atteint un équilibre sous la condition opératoire prédéterminée; et

des moyens (19) pour établir la température du point chaud de l'appareil sous-tout autre condition d'opération $T_{PC}{}^*$, selon l'équation suivante : $T_{PC}{}^* = T_H{}^* + \Delta T$; $T_H{}^*$ étant la température de l'huile sous ladite autre condition d'opération.

10. Le dispositif selon la revendication 9, dans lequel les moyens (17) pour effectuer l'analyse de l'échantillon d'huile sont des moyens pour mesurer la concentration de chaque résidu présent dans l'huile.

11. Le dispositif selon la revendication 9, dans lequel les moyens (17) pour effectuer l'analyse de l'échantillon d'huile sont choisis parmi le groupe constitué de la colorimétrie, l'analyse des gaz dissous, la spectrométrie de masse, la résonance magnétique nucléaire, la chromatographie en phase gazeuse ou liquide, la spectrométrie infrarouge, la spectrométrie ultraviolette et la fluorescence X.

12. Le dispositif selon la revendication 9, dans lequel les moyens (13) pour mesurer la température de l'huile comprennent un thermomètre, un thermocouple, ou une sonde de mesure de température.

13. Le dispositif selon la revendication 12, dans lequel les moyens (17) pour effectuer l'analyse, les moyens pour estimer, les moyens (19) pour calculer et les moyens pour établir la température du point chaud $T_{PC}{}^*$ sont réalisés par un ordinateur muni d'un logiciel et relié à un clavier et un écran.

**Patentansprüche**

1. Verfahren zum Bestimmen der Temperatur $T_{PC}{}^*$ der Heißstelle eines in einem elektrischen Gerät enthaltenen Öls in Abhängigkeit von verschiedenen Betriebsbedingungen des Geräts, wobei das Verfahren umfasst:

   a) Betreiben des elektrischen Geräts unter mindestens einer vorgegebenen Betriebsbedingungen, um so die Öltemperatur $T_H$ zu erhöhen; wobei das Verfahren **dadurch gekennzeichnet ist, dass** im Schritt a) die Temperatur des Öls $T_H$ solang erhöht wird, bis ein Gleichgewicht erreicht wird, wobei das Öl mindestens eine öllösliche chemische Verbindung umfasst, wobei jede Verbindung bei einer Rückstandsbildungstemperatur $T_R$ einen öllöslichen Rückstand bildet;

und dadurch, dass es ferner folgende Schritte umfasst:

b) Entnehmen mindestens einer Ölprobe nach dem Schritt a), wobei die Öltemperatur $T_H$ gemessen wird;

c) Vornehmen einer Analyse der im Schritt b) entnommenen Probe, um zu ermitteln, ob der Rückstand vorhanden ist oder nicht;

d) anhand der Analyse aus Schritt c): Abschätzen der Temperatur der Heißstelle unter der vorgegebenen Betriebsbedingung $T_{PC}$, die das Erscheinen des mindestens einen Rückstandes in der Probe ermöglicht hat, als gleich der Temperatur bei der Bildung des mindestens einen Rückstandes $T_R$;

e) Berechnen des Unterschieds $\Delta T$ zwischen der Temperatur der Heißstelle $T_{PC}$ und der Öltemperatur $T_H$ unter der vorgegebenen Betriebsbedingung;

f) Feststellen, dass die Temperatur $T_{PC}{}^*$ unter einer beliebigen anderen Betriebsbedingung des Geräts sich aus folgender Gleichung ergibt: $T_{PC}{}^* = T_H{}^* + \Delta T$, wobei $T_H{}^*$ die Temperatur des Öls unter der anderen Betriebsbedingung ist.

2. Verfahren nach Anspruch 1, wobei:

   - der Schritt a) unter Verwendung einer einzelnen öllöslichen chemischen Verbindung ausgeführt wird;
   - der Schritt b) nach dem Schritt a) ausgeführt wird;
   - im Anschluss an den Schritt c) der Schritt d) wie folgt ausgeführt wird: sofern der Rückstand vorhanden ist;

   d1) der Rückstand im Öl wird beseitigt,
   d2) das Gerät wird unter einer neuen Betriebsbedingung betrieben, um so die Öltemperatur $T_H$ bis zur Erreichung eines Gleichgewichts zu senken; und
   d3) die Schritte b), c), d1) und d2) wird solange wiederholt, bis kein Rückstand in der im Schritt c) entnommenen Probe mehr vorhanden ist,
   sofern der Rückstand nicht vorhanden ist;

   d4) die Schritte a), b) oder c) werden solange wiederholt, bis in der Probe ein Rückstand enthalten ist;
und Betriebsbedingungen werden hergestellt, in der die Temperatur $T_{PC}$ der Heißstelle gleich der Übergangstemperatur des Rückstandes $T_R$ ist.

3. Verfahren nach Anspruch 1, wobei:

   - der Schritt a) ausgeführt wird unter Verwendung von mindestens zwei unterschiedlichen, öllöslichen chemischen Verbindungen, die jeweils bei einer Rückstandsbildungstemperatur $T_R$ einen öllöslichen Rückstand bildet, wobei sich die Temperaturen $T_R$ jedes Rückstandes voneinander unterscheiden;
   - der Schritt b) nach dem Schritt a) ausgeführt wird;
   - der Schritt d) wie folgt ausgeführt wird: wenn kein Rückstand vorhanden ist:

     d1) die Schritte a) - c) werden bis zum Erscheinen mindestens eines der löslichen Rückstände in den entnommenen Proben wiederholt;

     wenn alle Rückstände vorhanden sind:

     d2) die Rückstände im Öl werden beseitigt und
     d3) die Schritte a) - c) werden bis zum Verschwinden mindestens eines der löslichen Rückstände in den entnommenen Proben wiederholt;

   die Betriebsbedingungen werden hergestellt, unter denen die Temperatur der Heißstelle $T_{PCest}$ zwischen der Rückstandsbildungstemperatur $T_{R1}$ der chemischen Verbindung, die den Rückstand erzeugt hat, und der Rückstandsbildungstemperatur $T_{R2}$ der chemischen Verbindung, die keinen Rückstand erzeugt hat, liegt;
   - und im Schritt e) $\Delta T$ gleich $T_{PCest}$ - $T_H$ berechnet wird, wobei $T_H$ die Öltemperatur ist, die bei dem Gleichgewicht, das bei der letzten Iteration des Schritts a) gemessen wurde, erreicht wurde.

4. Verfahren nach einem der Ansprüche 1 - 3, wobei das elektrische Gerät ein elektrischer Netztransformator ist.

5. Verfahren nach Anspruch 1, wobei die mindestens eine chemische Verbindung bei einer bestimmten Temperatur sind:

   - eine Verbindung, die ein öllösliches Gas bildet;

   - eine Verbindung, die irreversibel die Farbe wechselt;
   - eine Verbindung, die irreversibel die Phase wechselt; oder
   - eine Verbindung, deren chemische Struktur sich irreversibel verändert.

6. Verfahren nach Anspruch 1, wobei es sich bei der mindestens einen chemischen Verbindung um Diazoverbindungen, Metallcarbonyle; Farbstoffe, Pigmente, Flüssigkristalle oder Albumine handelt.

7. Verfahren nach Anspruch 6, wobei es sich bei der mindestens einen chemischen Verbindung um Diazoverbindungen handelt, wobei der in diesem Fall ausgebildete Rückstand öllöslicher Stickstoff ist, wobei das Verfahren dann eine dem Schritt a) vorausgehenden Schritt umfasst, in dem das Öl entgast wird, um die aufgelöste Luft daraus zu beseitigen.

8. Verfahren nach Anspruch 7, wobei die mindestens eine chemische Verbindung aus der nachfolgenden Gruppe gewählt sind: Diphenylsulfon-3,3'-disulfohydrazin und 4,4'-Oxy-bis-(benzolsulfonyl)hydrazin, die derart chemisch modifiziert sind, dass sie öllöslich sind.

9. Vorrichtung zur Bestimmung der Temperatur $T_{PC}^*$ der Heißstelle eines in einem elektrischen Gerät (1) enthaltenen Öls unter unterschiedlichen Betriebsbedingungen des Geräts, wobei das Öl mindestens eine öllösliche chemische Verbindung umfasst, wobei jede Verbindung bei einer Rückstandsbildungstemperatur $T_R$ einen öllöslichen Rückstand bildet; wobei die Vorrichtung derart gekennzeichnet ist, dass sie umfasst:

   Mittel (17) zur Analyse einer Ölprobe, um zu ermitteln, ob der Rückstand vorhanden ist;
   Mittel (19) zum Abschätzen der Temperatur der Heißstelle unter einer vorgegebenen Betriebsbedingung $T_{PC}$, die das Erscheinen des mindestens einen Rückstandes in der Probe ermöglicht hat, als gleich der Temperatur bei der Bildung des mindestens einen Rückstandes $T_R$;
   Mittel (13) zum Messen der Öltemperatur $T_H$;
   Mittel (19) zum Berechnen eines Unterschieds $\Delta T$ zwischen der Temperatur $T_{PC}$ der Heißstelle und der Öltemperatur $T_H$, wenn diese unter der vorgegebenen Betriebsbedingung ein Gleichgewicht erreicht hat; und
   Mittel (19) zum Bestimmen der Temperatur der Heißstelle des Geräts unter einer beliebigen anderen Betriebsbedingung $T_{PC}^*$ nach folgender Gleichung: $T_{PC}^* = T_H^* + \Delta T$; wobei $T_H^*$ die Temperatur des Öls unter der anderen Betriebsbedingung ist.

**10.** Vorrichtung nach Anspruch 9, wobei die Mittel (17) zur Analyse der Ölprobe Mittel zum Messen der Konzentration jedes im Öl vorhandenen Rückstandes sind.

**11.** Vorrichtung nach Anspruch 9, wobei die Mittel (17) zur Analyse der Ölprobe aus der nachfolgenden Gruppe gewählt sind: Kolorimetrie, DGA, NMR, Gas- oder Flüssigkeitschromatographie, Infrarot-Spektrometrie, UV-Spektrometrie und Röntgenfluoreszenz.

**12.** Vorrichtung nach Anspruch 9, wobei die Mittel (13) zum Messen der Öltemperatur einen Thermometer, ein Thermoelement oder einen Temperaturfühler umfassen.

**13.** Vorrichtung nach Anspruch 12, wobei die Mittel (17) zur Analyse, die Mittel zum Abschätzen, die Mittel (19) zum Berechnen und die Mittel zur Bestimmung der Temperatur der Heißstelle $T_{PC}^*$ durch einen mit einer Software ausgestatteten, an eine Tastatur und einen Bildschirm angeschlossenen Rechner ausgebildet sind.

**Claims**

**1.** Method for establishing hot spot temperature $T_{PC}^*$ of an oil contained in an electric apparatus, according to different operating conditions of the apparatus, the method comprising:

a) operating the electric apparatus according to at least one predetermined operating condition in order to increase the temperature $T_H$ of the oil; the method being **characterized in that** at step a) the oil temperature $T_H$ is increased until it reaches an equilibrium, the oil comprising at least one chemical compound soluble in the oil, each compound forming a residue soluble in the oil at a residue formation temperature $T_R$; and further comprising the following steps:
b) taking at least one sample of oil after step a) while measuring the oil temperature $T_H$;
c) performing an analysis of the at least one sample taken in step b) in order to determine whether or not the residue is present;
d) from the analysis of the step c), evaluating a hot spot temperature $T_{PC}$ under the at least one predetermined operating condition having allowed the presence of said at least one residue in the sample, as being equivalent to the residue formation temperature $T_R$ of said at least one residue;
e) calculating a difference $\Delta T$ between the hot spot temperature $T_{PC}$ and the oil temperature $T_H$ under the at least one predetermined operating condition;
f) establishing that the hot spot temperature $T_{PC}^*$ according to any other operating condition of the apparatus is obtained according to the following equation: $T_{PC}^* = T_H^* + \Delta T$, $T_H^*$ being the temperature of the oil under said other operating condition.

**2.** The method according to claim 1, wherein:

- the step a) is carried out using only one chemical compound soluble in the oil;
- the step b) is carried out after the step a);
- further to the step c), the step d) is carried out as follows:

if the residue is present:

d1) removing the residue present in the oil;
d2) operating the apparatus according to a new operating condition in order to reduce the oil temperature $T_H$ reached at the equilibrium; and
d3) repeating the steps b), c), d1) and d2) until there is no more residue present in the sample obtained in the step c),

if the residue is absent:

d4) repeating the steps a), b) and c) until the residue is present in the sample;

and establishing operating conditions where the hot spot temperature $T_{PC}$ is equal to the formation temperature $T_R$ of the residue.

**3.** The method according to claim 1, wherein:

- the step a) is carried out by using at least two different chemical compounds that are soluble in the oil, each forming a residue soluble in the oil at a residue formation temperature $T_R$, the transition temperature $T_R$ for each residue being different from one another;
- the step b) is carried out after the step a);
- the step c) is carried as follows:

if no residue is present:
d1) repeating the steps a) to c) until at least one of said soluble residues is present in the samples that are taken;
if all the residues are present:

d2) eliminating the residues present in the oil; and

d3) repeating the steps a) to c) until at least one of said soluble residues is not present any more in the samples that are taken;

establishing operating conditions where a hot spot temperature $T_{PCest}$ is between a formation temperature $T_{R1}$ of the residue of the chemical compound having produced the residue and a formation temperature $T_{R2}$ of the residue of the chemical compound that is not present;

and at the step e), calculating $\Delta T$ as being equal to $T_{PCest} - T_H$, $T_H$ being the temperature of the oil reached at the equilibrium measured during a last iteration of the step a).

4. The method according to any one of claims 1 to 3, wherein the electric apparatus is an electric power transformer.

5. The method according to claim 1, wherein the one or more chemical compounds, at a given temperature, are:

- a compound that forms a soluble gas in the oil;
- a compound changing of color in an irreversible way;
- a compound that changes of phase in an irreversible way; or
- a compound changing of chemical structure in an irreversible way.

6. The method according to claim 1, wherein the one or more chemical compounds are diazoic compounds, carbonyl metals, coloring compounds, pigments, liquid crystals or albumins.

7. The method according to claim 6, wherein the one or more chemical compounds are diazoic compounds, the residue then formed being nitrogen soluble in the oil, the method then comprising a step preliminary to the step a) consisting in carrying out degassing of the oil to eliminate dissolved air from the oil.

8. The method according to claim 7, wherein the one or more chemical compounds are selected from the group consisting of diphenylsulfone-3,3'-disulfohydrazine and 4,4'-oxybis(benzenesulfonyl)hydrazine chemically modified in order to be soluble in the oil.

9. A device for establishing hot spot temperature $T_{PC}^*$ of an oil contained in an electrical apparatus (1), according to different operating conditions of the apparatus, the oil comprising at least one chemical compound soluble in the oil, each compound forming a residue soluble in the oil at a formation temperature $T_R$ of the residue; the device being **characterized in that** it comprises:

means (17) for carrying out an analysis of an oil sample in order to determine if the residue is present;
means (19) for estimating a hot spot temperature under a predetermined operating condition $T_{PC}$ having allowed a presence of said at least one residue in the sample, as being equal to the formation temperature $T_R$ of said at least one residue;
means (13) for measuring a temperature $T_H$ of the oil;
means (19) for calculating a difference $\Delta T$ between the hot spot temperature $T_{PC}$ and the oil temperature $T_H$ when it has reached an equilibrium under the predetermined operating condition; and
means (19) for establishing the hot spot temperature of the apparatus under any other operating condition $T_{PC}^*$, according to the following equation: $T_{PC}^* = T_H^* + \Delta T$; $T_H^*$ being the temperature of the oil under said other operating condition.

10. The device according to claim 9, wherein said means (17) for carrying out the analysis of the oil sample are means for measuring a concentration of each residue present in the oil.

11. The device according to claim 9, wherein said means (17) for performing the analysis of the oil sample are selected from the group consisting of colorimetry, dissolved gas analysis, mass spectrometry, nuclear magnetic resonance, gas or liquid phase chromatography, infrared spectrometry, ultraviolet spectrometry and X-ray fluorescence.

12. The device according to claim 9, wherein said means (13) for measuring the temperature of the oil comprise a thermometer, a thermocouple, or a temperature measuring probe.

13. The device according to claim 12, wherein said means (17) for carrying out the analysis, said means for estimating, said means (19) for calculating and said means for establishing the hot spot temperature $T_{PC}^*$ are carried out by a computer supplied with a software and linked to a keyboard and a screen.

FIGURE 1

FIGURE 2

FIGURE 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 4140999 A

**Littérature non-brevet citée dans la description**

• **M. DUVAL et al.** *IEEE Transactions on Electrical Insulation,* Octobre 1982, vol. EI-17 (5